# EUROPÄISCHE PATENTSCHRIFT

(11) **EP 0 607 158 B1**
(45) Veröffentlichungstag und Bekanntmachung des Hinweises auf die Patenterteilung: **08.01.1997**
(21) Anmeldenummer: 92917062.9
(22) Anmeldetag: 12.08.1992
(51) Int. Cl.: C10L 9/10

(54) **VERFAHREN ZUR BINDUNG VON SALZBILDNERN AN FESTSTOFFEN BEI DER VERBRENNUNG VON FOSSILEN BRENNSTOFFEN, MÜLL O. DGL.**
PROCESS FOR BONDING HALOGENS TO SOLIDS IN THE COMBUSTION OF FOSSIL FUELS, RUBBISH AND THE LIKE
PROCEDE POUR LIER DES HALOGENES A DES SOLIDES LORS DE LA COMBUSTION DE COMBUSTIBLES FOSSILES, DE DECHETS MENAGERS ET ANALOGUES

(43) Veröffentlichungstag der Anmeldung: 27.07.1994
(73) Patentinhaber: TESET AG, B-4888 Waimes (BE)
(72) Erfinder: FAATZ, Otto, (Verstorben) (DE)
(74) Vertreter: Lins, Edgar, Dipl.-Phys. Dr.jur.
(86) Internationale Anmeldenummer: DE9200676
(87) Internationale Veröffentlichungsnummer: WO9404635

(56) Entgegenhaltungen:
- DE-A- 3 329 823
- DE-A- 3 717 191
- DE-A- 4 125 890
- US-A- 2 928 718

## Beschreibung

Die Erfindung betrifft ein Verfahren zur Bindung von Salzbildnern an Feststoffen bei der Verbrennung fossiler Brennstoffe, Müll o. dgl. mit folgenden Verfahrensschritten:
- Zugabe von Feuchtigkeit zu den fossilen Brennstoffen oder dem Müll und Zugabe von basischen Stoffen, insbesondere CaCo₃ oder MgCO₃, in möglichst gleichmäßiger Verteilung, wobei Feuchtigkeit und basische Stoffe in einer solchen Menge zugegeben werden und eine solche Verweilzeit der Mischung vorgesehen wird, daß eine möglichst vollständige Neutralisationsreaktion zwischen Salzbildnern und basischen Stoffen, insbesondere in einem weitgehend abgeschlossenen Behälter, in dem sich ein Wasserdampf-Sättigungszustand einstellt, abläuft
- Verbrennung der Mischung mit einer Feuerbett-Temperatur, die unterhalb der thermischen Dissoziationstemperatur der aus dem basischen Stoff und den Salzbildnern entstehenden Verbindungen liegt.

Ein derartiges Verfahren ist durch DE 37 17 191 Al bekannt. Der diesem Verfahren zugrunde liegende Gedanke besteht darin, durch eine ausreichende Feuchte der fossilen Brennstoffe, insbesondere aber des Mülls, die Bedingungen zu schaffen, in denen die dann zugegebenen basischen Stoffe mit Salzbildnern in dem Müll möglichst gut und vollständig reagieren können, um so Salze zu bilden, die bei der anschließenden schonenden Verbrennung nicht dissoziieren und somit in der Schlacke gebunden bleiben. Dieses Verfahren kann bei geeigneten Brennstoffen dazu führen, daß auf eine Reinigung des Rauchgases im Hinblick auf die Salzbildner (insbesondere SO₂, HCl, Nitrate) verzichtet werden kann. In ungünstigen Fällen kann eine Rauchgasreinigung vorgenommen werden, die jedoch aufgrund der starken Reduzierung der Salzbildner nur noch eine Art Nachreinigung darstellt.

Die Umsetzung der Salzbildner mit den basischen Zusatzstoffen kann bei dem bekannten Verfahren dadurch gefördert werden, daß die Mischung vor Aufgabe auf den Verbrennungsrost, vorzugsweise über eine mit dem Verbrennungsraum in Verbindung stehende große Wärmeabstrahlfläche, einer Temperatur von bis zu 300° C ausgesetzt und dadurch vorgeheizt wird.

In der Praxis hat es sich gezeigt, daß die Umsetzung der Salzbildner mit den basischen Zusatzstoffen trotz Einhaltung einer ausreichenden Feuchtigkeit der fossilen Brennstoffe, des Mülls o. dgl. und auch bei Ausbildung einer wasserdampfgesättigten Umgebung nicht vollständig erfolgt, obwohl für eine möglichst gleichmäßige Verteilung der Zusatzstoffe gesorgt worden ist.

Der Erfindung liegt daher die Aufgabe zugrunde, das Verfahren der genannten Art so zu verbessern, daß die Umsetzung der Salzbildner mit den basischen Zusatzstoffen verbessert wird.

Diese Aufgabe wird erfindungsgemäß bei Durchführung des Verfahrens der eingangs erwähnten Art dadurch gelöst, daß den fossilen Brennstoffen oder dem Müll vor dem Zusatz der basischen Stoffe eine die basischen Stoffe teilweise neutralisierende saure Flüssigkeit mit einem pH-Wert zwischen 2 und 6 in einer Menge zwischen 3 und 10 Gew.% zugegeben wird.

Die Zugabe einer sauren Flüssigkeit zur Befeuchtung der fossilen Brennstoffe oder des Mülls ist eine überraschende Maßnahme, da hierdurch eine teilweise Neutralisation der zugegebenen basischen Stoffe erfolgt. Es hat sich jedoch gezeigt, daß die saure Flüssigkeit offensichtlich als eine Art Katalysator für die Umsetzung der Säurebildner in dem fossilen Brennstoff oder dem Müll mit den basischen Zusatzstoffen fungiert und durch die Zugabe der sauren Flüssigkeit eine vollständigere Umsetzung der Salzbildner mit den basischen Zusatzstoffen erreicht wird. Dies kann durch die an sich bekannte Vorheizung des Gemisches auf bis zu 300° C unterstützt werden.

Bevorzugte pH-Werte der sauren Flüssigkeit liegen zwischen 2 und 4, insbesondere zwischen 2 und 3.

In einer bevorzugten Ausführungsform des Verfahrens liegt der Gewichtsanteil der zugegebenen sauren Flüssigkeit bezogen auf den fossilen Brennstoff, Müll o. dgl. zwischen 3 und 7 %, vorzugsweise zwischen 4 und 6 %, insbesondere bei 5 %. Die Zugabe der sauren Flüssigkeit in der benannten Menge erfolgt auch dann, wenn beispielsweise der Müll schon einen hohen Feuchtigkeitsgrad aufweist, so daß in solchen Fällen ausnahmsweise auch eine höhere Feuchte als die für dieses Verfahren üblichen 10 bis 35 % erreicht werden kann.

In einer besonders bevorzugten Ausführungsform des erfindungsgemäßen Verfahrens wird die zugegebene saure Flüssigkeit aus einer Kondensationsreinigungsstufe für das Rauchgas entnommen, wobei das Kondensat durch einen Durchlauf durch ein Karbonatbettfilter gereinigt werden kann. Auf diese Weise kann das in der Kondensationsreinigungsstufe (vgl. DE 33 29 823 C1) anfallende Kondensat im Kreislauf wiederverwendet werden, wobei es mit den basischen Zusatzstoffen zur Salzbildung in der Schlacke bei der Verbrennung beiträgt. Die Verwendung der Kondensationsreinigungsstufe bietet den Vorteil, daß sie zugleich als eine Sicherheitsstufe für den Fall dient, daß aufgrund unbeabsichtigter Veränderungen der Verbrennungsbedingungen ein erhöhter Schadstoffausstoß im Rauchgas auftritt, da das Rauchgas in der Kondensationsreinigungsstufe noch gereinigt wird. Da das dabei anfallende Kondensat erfindungsgemäß im Verfahren wiederverwendet wird, fallen keine zu entsorgenden Stoffe an.

## Patentansprüche

1. Verfahren zur Bindung von Salzbildnern an Feststoffen bei der Verbrennung fossiler Brennstoffe oder Müll mit folgenden Verfahrensschritten:
- Zugabe von Feuchtigkeit zu den fossilen Brennstoffen oder dem Müll und Zugabe von basischen Stoffen, insbesondere CaCo₃ oder MgCO₃, in möglichst gleichmäßiger Verteilung, wobei Feuchtigkeit und basische Stoffe in einer solchen Menge zugegeben werden und eine solche Verweilzeit der Mischung vorgesehen wird, daß eine möglichst vollständige Neutralisationsreaktion zwischen Salzbildnern und basischen Stoffen, insbesondere in einem weitgehend abgeschlossenen Behälter, in dem sich ein Wasserdampf-Sättigungszustand einstellt, abläuft
- Verbrennung der Mischung mit einer Feuerbett-Temperatur, die unterhalb der thermischen Dissoziationstemperatur der aus dem basischen Stoff und den Salzbildnern entstehenden Verbindungen liegt,
**dadurch gekennzeichnet**, daß den fossilen Brennstoffen oder dem Müll vor dem Zusatz der basischen Stoffe eine die basischen Stoffe teilweise neutralisierende saure Flüssigkeit mit einem pH-Wert zwischen 2 und 6 in einer Menge zwischen 3 und 10 Gew.% zugegeben wird.

2. Verfahren nach Anspruch 1, **dadurch gekennzeichnet**, daß die bei der Verbrennung entstehenden Rauchgase einer Kondensationsreinigung unterworfen werden und daß das entstehende saure Kondensat den fossilen Brennstoffen, Müll o. dgl. zugegeben wird.

3. Verfahren nach Ansprüchen 1 oder 2, **dadurch gekennzeichnet**, daß der pH-Wert der sauren Flüssigkeit zwischen 2 und 4, insbesondere zwischen 2 und 3 liegt.

4. Verfahren nach einem der Ansprüche 1 bis 3, **dadurch gekennzeichnet**, daß der Gewichtsanteil der zugegebenen sauren Flüssigkeit zwischen 3 und 7 % liegt.

5. Verfahren nach Anspruch 4, **dadurch gekennzeichnet**, daß der Gewichtsanteil der sauren Flüssigkeit zwischen 4 und 6 % liegt.

6. Verfahren nach Anspruch 5, **dadurch gekennzeichnet**, daß der Gewichtsanteil der sauren Flüssigkeit bei 5 % liegt.

## Claims

1. Process for bonding salt forming substances to solids when burning fossil fuels or waste, comprising the following steps:
- addition of moisture to the fossil fuels or to the waste and addition of basic substances, especially CaCO₃ or MgCO₃, with a distribution as uniform as possible, the quantity of added moisture and basic substances and the stay time foreseen for the mixture being such, that a neutralization reaction as complete as possible will take place between the salt forming substances and the basic substances, especially in a practically closed vessel in which a state of water vapour saturation is achieved,
- burning of the mixture at a fire bed temperature lower than the thermal dissociation temperature of the compounds formed by the basic substances and the salt forming substance,
characterized by adding to the fossil fuels or to the waste between 3 and 10 weight percent of an acid liquid having a pH value between 2 and 6 and partially neutralizing the basic substances, before adding the basic substances.

2. Process according to claim 1, characterized in that the combustion gases generated during combustion are submitted to purification through condensation and that the resulting acid condensation product is added to the fossil fuels, waste or the like.

3. Process according to claim 1 or 2, characterized in that the pH value of the acid liquid is between 2 and 4, particularly between 2 and 3.

4. Process according to one of the claims 1-3, characterized in that the weight percentage of the added acid liquid is between 3 and 7%.

5. Process according to claim 4, characterized in that the weight percentage of the acid liquid is between 4 and 6%.

6. Process according to claim 5, characterized in that the weight percentage of the acid liquid is 5%.

## Revendications

1. Procédé destiné à lier des substances formant des sels à solides, lors de la combustion de carburants fossiles ou de l'incinération de déchets présentant, les étapes suivantes:
- addition d'humidfiant aux carburants fossiles ou aux déchets et addition de substances basiques, en particulier du CaCO₃ ou du MgCO₃, avec une distribution aussi uniforme que possible, les quantités d'humidifiant et de substances basique ajoutées et le temps de séjour prévu pour le mélange étant tels qu'une réaction de neutralisation aussi complète que possible ait lieu entre les substances formant des sels et les substances basiques, en particulier dans un récipient pratiquement fermé, dans lequels s'etablit une saturation en vapeur d'eau,
- incinération du mélange à une température de base de feu inférieure à la température de dissociation thermique des composés formés de la substance basique et des substances formant des sels
caractérisé par le fait d'ajouter aux carburants fossiles ou aux déchets avant l'addition de substances basiques un liquide acide d'un pH entre 2 et 6 d'une quantité entre 3 et 10% du poids et neutralisant partiellement les substances basiques.

2. Procédé selon la revendication 1, caractérisé par le fait que les gaz de combustion générés lors de l'incinération sont soumis à une épuration par condensation et que le produit de condensation acide obtenu est ajouté aux carburants fossiles, aux déchets ou aux équivalents.

3. Procédé selon l'une des revendications 1 ou 2, caractérisé par le fait que la valeur de pH de la solution acide se situe entre 2 et 4, en praticulier entre 2 et 3.

4. Procédé selon l'une des revendications 1 à 3, caractérisé par le fait que le pourcentage en poids de la solution acide ajoutée se situe entre 3 et 7%.

5. Procédé selon la revendication 4, caractérisé par le fait que le pourcentage en poids de la solution acide se situe entre 4 et 6%.

6. Procédé selon la revendication 5, caractérisé par le fait que le pourcentage du liquide acide est de 5%.
